## Europäisches Patentamt
## European Patent Office
## Office européen des brevets

(19)

(11) Veröffentlichungsnummer: **0 090 948**
**B1**

(12) # EUROPÄISCHE PATENTSCHRIFT

(45) Veröffentlichungstag der Patentschrift:
12.08.87

(51) Int. Cl.⁴: **A 61 C 19/00**

(21) Anmeldenummer: **83101988.0**

(22) Anmeldetag: **01.03.83**

(54) Gerät zum Behandeln von Zahnersatzteilen.

(30) Priorität: **02.04.82 DE 3212379**

(43) Veröffentlichungstag der Anmeldung:
**12.10.83 Patentblatt 83/41**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**EP-A-0 037 461**
**FR-A-2 373 765**
**GB-A-2 098 439**
**US-A-2 767 297**

(73) Patentinhaber: **ESPE Stiftung & Co Produktions-
und Vertriebs KG, D-8031 Seefeld (DE)**

(72) Erfinder: **Herold, Wolf- Dietrich, Dr., Seestrasse
16, D-8031 Hechendorf (DE)**
Erfinder: **Grafwallner, Karl L., Kathi- Kobus-
Strasse 9, D-8000 München 40 (DE)**
Erfinder: **Keller, Michael, Riesheimerstrasse 7,
D-8032 Lochham (DE)**

(74) Vertreter: **Strehl, Schübel- Hopf, Groening, Schulz,
Widenmayerstrasse 17 Postfach 22 03 45, D-8000
München 22 (DE)**

EP 0 090 948 B1

LIBER, STOCKHOLM 1987

## Beschreibung

Die Erfindung betrifft ein Gerät zum Behandeln von Zahnersatsteilen, wie es im Oberbegriff des Patentanspruchs 1 näher angegeben ist.

Im dentaltechnischen Bereich werden z. B. zur Herstellung von Zahnersatzteilen, wie Kronen, einzelnen Zähnen, Brücken, Gebißteilen oder ganzen Gebissen, dentale Werkstoffe verwendet, die mittels eines Fotoinitiatorsystems mit Licht polymerisierbar und aushärtbar sind.

Diese Materialien weisen aufgrund der Eigenfarbe der in ihnen enthaltenen Polymerisationsinitiatoren einen unerwünschten Gelbstich auf, der sich jedoch mittels einer anschließenden Bestrahlung durch eine irreversible Reaktion dauerhaft auf einen der natürlichen Zahnfarbe entsprechenden Farbton bleichen läßt. Typischerweise wird für diesen Bleichvorgang eine Strahlung in einem Bereich von ca. 400 nm bis ca. 500 nm (bei einem Maximum von ca. 460 nm) benötigt, wobei der Bestrahlungsvorgang über eine längere Zeitspanne von beispielsweise 30 min durchzuführen ist. Diese Bestrahlung ergibt gleichzeitig eine erwünschte weitere Polymerisation des Materials.

Für den Aushärtungsvorgang sind Belichtungsgeräte entwickelt worden, die als Lichtquellen Halogen-Quarz-Lampen einsetzen. Derartige Belichtungsgeräte sind beispielsweise in der DE-A-2 901 534 und der EP-A-0 037 461 beschrieben. Bei diesen Belichtungsgeräten deren Nutzstallung im Bereich von 400 nm bis 500 nm liegt, wird eine nicht unerhebliche Wärmemenge erzeugt, die innerhalb der für die Aushärung notwendigen Belichtungszeit das Zahnersatzteil erwärmt. Eine solche Temperaturerhöhung wirkt sich nachteilig aus, weil die verwendeten Kunstharze einen anderen thermischen Ausdehnungskoeffizienten als z. B. die Metallkronen haben, die mit dem Kunstharz verblendet werden sollen. Am Ende des Aushärtungsprozesses treten beim Abkühlen daher leicht Wärmespannungen auf, die unter Umständen Risse und Spalte an der Kunstharz-Metall-Grenzfläche verursachen, auch kann das Kunstharz selbst einer Rißbildung unterliegen.

Zwar ist bei den bekannten Geräten durch eine besondere Beschichtung des Reflektors der Lichtquelle sowie durch Einsatz von Filtern und Kühlgebläsen die Wärmebestrahlung vermindert worden, jedoch ist eine noch weitere Herabsetzung der auf die behandelnden Teile geworfenen Wärmestrahlung wünschenswert.

Bei den bekannten Geräten hat sich ferner als nachteilig erwiesen, daß die aus einem Punktstrahler mit zugeordnetem Parabolspiegel bestehende Lichtquelle die Objekte im wesentlichen mit einem parallelen Strahlenbündel beleuchtet. Dementsprechend kann insbesondere bei gekrümmten Zahnersatzteilen eine Abschattung einzelner Bereiche auf treten, so daß in den abgeschatteten Bereichen die Kunstharzmasse nicht oder nur unvollständig aushärtet und ausbleicht. Dieser Effekt wirkt sich auch nachteilig auf die erreichbare Haftfestigkeit zwischen einer Kunstharzbeschichtung und einer Metalloberfläche, z. B. einer Brückenkonstruktion aus Metall, aus. Auf der Oberfläche der Metallteile werden kleine Metallperlen aufgesintert, so daß die Metalloberfläche rauh wird und zwischen den Perlen und der Metalloberfläche kleine Hinterschneidungsgebiete entstehen, in die beim Auftragen der noch flüssige Kunststoff eindringt. Nach Aushärten des Kunststoffes wirken diese Metallperlen als Anker für den gesamten Kunststoffüberzug. Diese Ankerwirkung geht aber verloren, wenn aufgrund der Abschattung kein Licht in die Hinterschneidungsbereiche gelangt und der Kunststoff dort nicht oder nur unzureichend aushärtet.

Weiterhin muß bei den bekannten Geräten als Fehlerquelle berücksichtigt werden, daß eine Bedienungsperson versehentlich das zu behandelnde Werkstück falsch herum einlegt, daß also der auszuhärtende und auszubleichende Kunststoff auf der von der Beleuchtungseinrichtung abgewandten Seite liegt.

Aus diesen Gründen besteht für Bestrahlungsgeräte der angegebenen Art eine weitere Forderung darin, daß eine möglichst allseitig-gleichmäßige Beleuchtung der zu behandelnden Gegenstände erfolgt.

Dementsprechend besteht die Aufgabe der vorliegenden Erfindung darin, ein eingangs angegebenes Gerät zum Behandeln von Zahneinsalzteilen so abzuwandeln, daß die zum Aushärten und Ausbleichen verwendete Strahlung den Werkstoff nicht erwärmt und diese Strahlung möglichst gleichmäßig von allen Seiten aufdas zu behandelnde Werkstück trifft.

Diese Aufgabe wird mit einem Gerät entsprechend dem Oberbegriff des Patentanspruchs 1 nach der im kennzeichnenden Teil dieses Anspruchs angegebenen Weise gelöst.

Gemäß der Erfindung ist vorgesehen, als Lichtquelle für die Belichtung mit dem die Polymerisation auslösenden Licht Leuchtstoffröhren zu verwenden. Derartige Leuchtstoffröhren zeigen zum einen eine niedrige Wärmeentwicklung, zum anderen sind sie nicht punktförmig, sondern emittieren flächig, so daß das von ihnen emittierte Licht keine Vorzugsrichtung hat, sondern diffus verteilt ist. Damit ergibt sich eine gleichmäßige Ausleuchtung des für die Aufnahme eines Zahnersatzteils vorgesehenen Bereiches. Die Aufnahme ist von den zur Beleuchtung eingesetzten Leuchtstoffrohren umgeben. Dabei sind solche Leuchtstoffröhren au zwei gegenüberligenden Gehäusewänden vorgesehen, beispielsweise am Boden und an der Decke des Gerätes; zwischen denen die Aufnahme für das Zahnersatzteil angeordnet ist.

Aus der US-A-3,433,949 ist es zwar bekannt,eine Strahlungsbehandlung mittels Leuchtstoffröhren durchzuführen. Dort geht es jedoch zum Unterschied von der Erfindung nicht um das Bleichen und Nachpolymerisieren von Dentalwerkstoffen, sondern um das Testen von Chemikalien auf Strahlungsbeständigkeit, wobei es auf eine allseitige Bestrahlung nicht ankommt.

Aus der FR-A-2 373 765 ist zwar ein Gerät zum Bestahler von Zahnesahteilen mit eine Aufnahme angebendén Strahlungsrohren bekannt, doch handelt es sich dabei im einem Brennofen, der bei Temperaturen von 900°C bis 1100°C arbeitet.

Bei dem erfindungsgemäßen Gerät sind die Wände des Gehäuses zusätzlich mit Spiegeln oder Reflektoren versehen, so daß das Licht von allen Seiten auf den zu behandelnden Dental-Werkstoff einfällt.

Die von den Leuchtstoffröhren abgestrahlte Gesamtintensität bestimmt die erforderliche Belichtungszeit. Diese wird in der Regel vorweg fest eingestellt. Um nun zu gewährleisten, daß während eines Bestrahlungsvorgangs durch einen unbemerkten Ausfall einzelner Leuchtstoffröhren die abgestrahlte Lichtintensität nicht verringert und damit die zur Aushärtung erforderliche Gesamtintensität nicht erreicht wird, sind die Leuchtstoffröhren in Reihe geschaltet. Der Ausfall einer einzelnen Leuchtstoffröhre hat dann den Ausfall aller Leuchtstoffröhren zur Folge, so daß das fehlerhafte Arbeiten des Gerätes erkannt werden kann.

Die üblichen Ein-Komponenten-Werkstoffe, die mit sichtbarem Licht aushärtbar sind, besitzen einen Sensibilisator, der von Licht mit einér Wellenlänge um etwa 460 nm angeregt wird. Dementsprechend werden Leuchtstoffröhren verwendet deren Emissionsmaximum zwischen 400 und 500 nm, insbesondere bei etwa 460 nm liegt. Eine solche Emission läßt sich mit Leuchtstoffrohren erzielen, die vorzugsweise eine Beschichtung aus einem Barium-Magnesium-Aluminat haben, das mit Europium dotiert ist.

Wie in der oben erwähnten EP-A-0 037 461 beschrieben ist, bildet sich bei einem Ein-Komponenten-Werkstoff beim Aushärten mittels Licht an seiner Oberfläche eine Schmierschicht, wenn in der Umgebungsatmosphäre Sauerstoff vorhanden ist, weil Sauerstoffmoleküle die Polymerisation inhibieren. Diese unvollständig polymerisierte Schicht führt im Munde zu oberflächlichen Mikrorissen und in Verbindung damit zu Verfärbungen. Um diese Schwierigkeiten zu beheben, wurde bisher das Zahnersatzteil in einen innen verspiegelten Metallbehälter gelegt, der mit einer Glasscheibe abgedeckt und vor der Bestrahlung evakuiert wurde. Die Verspiegelung wird bei diesem Gerät jedoch im Laufe der Zeit etwas blind, weil die von dem Einkomponentenwerkstoff ausgehenden Dämpfe unter der Lichteinwirkung auf der Oberfläche der Spiegelschicht reagieren und einen Belag bilden. Dieser Belag ist nur schwer zu entfernen, wobei sein Entfernen leicht zu einem Verkratzen oder Erblinden des Spiegels führt. Um diese Schwierigkeiten zu vermeiden, ist gemäß einer weiteren, besonders bevorzugten Ausgestaltung der Erfindung vorgesehen, einen gasdicht verschließbaren Behälter aus einem für das jeweils notwendige Licht durchlässigen Material, insbesondere einen Behälter aus Glas oder Quarz zu verwenden. Dieser Behälter ist aus dem Gehäuse des Gerätes herausnehmbar, so daß er leicht ausgewischt und gesäubert werden kann. Außerdem ist ausgeschlossen, daß ein direkt an die Wand anliegendes Zahnersatzteil durch den eigenen Schatten unvollständig polymerisiert.

Bei einer anderen Ausführungsform ist diese oben beschriebene Ausführungsform der Erfindung dahin weiterentwickelt, daß mit dem Vakuumanschluß ein Vakuummeter verbunden ist, das über einen Schalter das Ein- bzw. Ausschalten der Leuchtstoffrohren steuert. Die Leuchtstoffrohren werden damit erst eingeschaltet, wenn ein bestimmter Druck im Inneren des Behälters und damit ein kritischer Sauerstoffgehalt unterschritten ist. Sollte durch äußere Einwirkungen die Abdichtung des Behälters während der Bestrahlung nachlassen und Luft in den Behälter eindringen, so wird die Bestrahlung abgeschaltet und der Fehler dem Anwender über ein Signal mitgeteilt.

In einer weiteren Ausführungsform ist die Aufnahme mit zwei Gasanschlüssen versehen, so daß der Sauerstoff durch einen Gasstrom, z. B. von Stickstoff oder Argon, verdrängt werden kann. Eine Kontrolle des Gasstromes kann mit eine Strömungsmeßgerät erfolgen.

Im folgenden wird nun die Erfindung anhand der in den Figuren dargestellten Ausführungsbeispielen beschrieben und näher erläutert.

Figur 1 zeigt schematisch ein erstes Ausführungsbeispiel des erfindungsgemäßen Gerätes,

Figur 2 zeigt eine weitere Ausführungsform

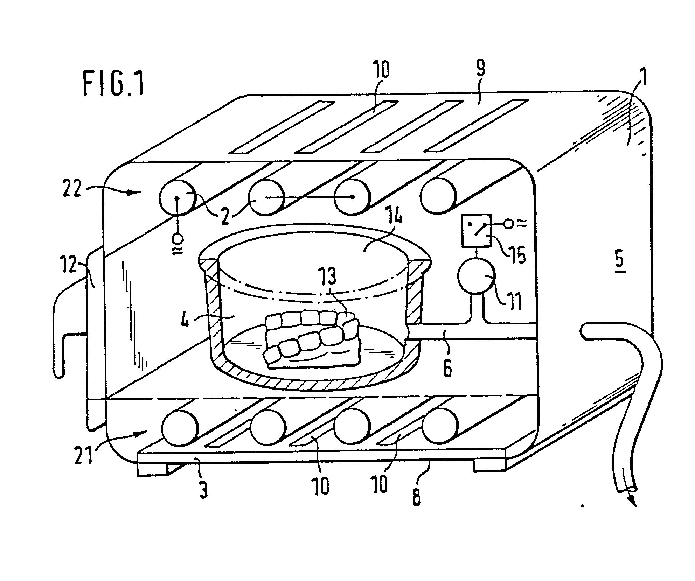

Bei der Ausführungsform nach Figur 1 befinden sich in einem Gehäuse 1 auf der Innenseite des Bodens 8 und der Decke 9, dei beide mit luftdurchtriffsöffnungen 10 versehen sind, je eine Reihe 21 bzw. 22 von Leuchtoffröhren 2. Diese Leuchtstoffröhren weisen eine Beschichtung aus einem Barium-Magnesium-Aluminat auf, das mit Europium dotiert ist, so daß die Leuchtstoffröhren ihr Emissionsmaximum in einem Spektralbereich um 460 nm zeigen. Mit Licht dieser Wellenlänge wird der dem Ein-Komponenten-Werkstoff zugesetzte Sensibilisator aktiviert, die Polymerisation und das Ausbleichen bewirkt.

Zur besseren Ausnutzung des von den Leuchtstoffröhren 2 emittierten Lichts sind auf der Innenseite des Gehäuses Reflektoren 3 angeordnet, die in dem ausgewählten Spektralbereich einen hohen Reflexionskoeffizienten besitzen. Anstelle solcher Reflektoren können auch die entsprechenden Innenseiten des Bodens 8, der Decke 9 und der Seitenwände 5 mit einem spiegelnden Überzug, z. B. aus Aluminium oder aus Chrom versehen sein. Statt solcher an den Wänden angebrachten Reflektoren kann auch ein innenseitig verspiegelter, stirnseitig offener Zylinder vorgesehen werden, in dessen Inneren die Aufnahme angeordnet ist. Besonders vorteilhaft ist es, die Spiegelschicht direkt auf die Außenseite der Aufnahme 4 aufzubringen, da ein Blindwerden des Spiegels z. B. durch Verschmutzen oder Verkratzen durch diese Maßnahme ausgeschlossen ist.

Zwischen den beiden Reihen 21 bzw. 22 von Leuchtstoffröhren 2 ist die als Behälter ausgebildete Aufnahme 4 für das Zahnersatzteil 13 angeordnet. Dieser Behälter 4 besteht aus einem Material, das bei dem gewünschten Spektralbereich durchlässig ist. Für einen Spektralbereich von 460 nm kommt als Material Glas und Quarz in Frage. In dem dargestellten Beispielsfall besitzt der Behälter 4 einen Vakuumanschluß 6. Das zu behandelnde Zahnersatzteil 13 wird in den Behälter 4 eingelegt, sodann wird der mit einer flexiblen Dichtung abgedichtete Verschlußdeckel 14 aufgelegt und der Behälter 4 evakuiert. Mit dem Vakuumanschluß 6 ist ein Vakuummeter 11 verbunden, das einen Schalter 15 steuert. Über den Schalter 15 wird die Versorgungsspannung an die Leuchtstoffröhren 2 gelegt. Sobald ein bestimmtes Mindestvakuum in dem Behälter 4 erreicht ist (z. B. 5 mbar), betätigt das Vakuumeter 11 den Schalter 15 und schließt ihn, so daß die Versorgungsspannung an die Leuchtstoffröhren gelegt wird und die Bestrahlung beginnt.

Bei der dargestellten Ausführungsform kann der das Zahnersatzteil 13 aufnehmende Behälter 4 mittels einer Schublade 12 aus dem Gehäuse 1 herausgenommen werden, z. B. um ihn zu reinigen.

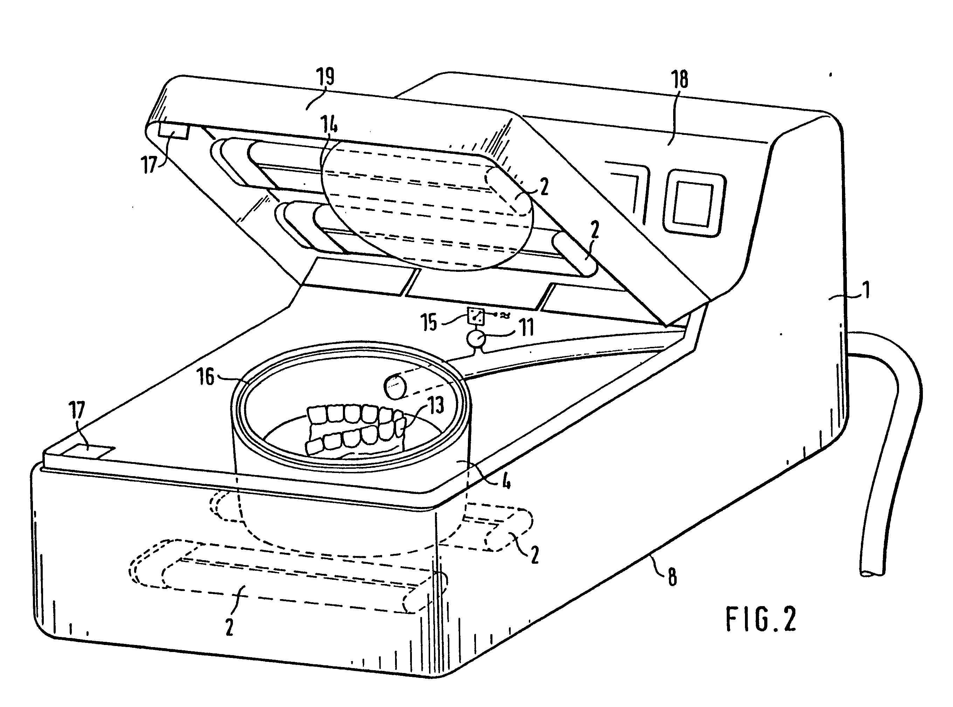

Figur 2 zeigt eine weitere Ausführungsform, bei der das Gehäuse 1 mit einer Klappe 19 geöffnet wird. In dieser Klappe 19 wie auch in dem Boden 8 befinden sich zwei Leuchtstoffröhren 2. Diese Leuchtstoffröhren sind abweichend von der in Figur 1 dargestellten Ausführungsform U-förmig gekrümmt, so daß sie relativ kurz ausgebildet sind, aber dennoch viel Licht emittiert.

Bei dieser zweiten Ausführungsform ist vorzugsweise der Verschlußdeckel 14 in der Klappe 19 angeordnet, insbesondere an einer oder mehreren Federn darin aufgehängt. Beim Schließen der Klappe 19 wird der Deckel 14 federbelastet auf die Dichtung 16 der Aufnahme 4 aufgedrückt und die Aufnahme 4 zwangsläufig geschlossen. Ein Elektromagnet 17 sorgt für vollständiges Schließen der Klappe und damit der Aufnahme 4 und setzt anschließend, z. B. über einen Schalter, eine nicht dargestellte Vakuumpumpe in Betrieb. Nach Erreichen des vorgeschriebenen Vakuums werden die Leuchtstoffröhren 2 mittels des vom Vakuummeter 11 gesteuerten Schalters 15 für eine voreingestellte Zeit eingeschaltet. Bei unzureichender abdichtung bzw. Nichterreichen des vorgeschriebenen Vakuums innerhalb einer bestimmten Zeit erscheint auf der Anzeigetafel 18 des Gerätes eine Fehleranzeige, gegebenenfalls wird auch ein akustisches Signal abgegeben.

## Patentansprüche

1. Gerät zum Behandeln von Zahnersatzteilen mit Strahlung einés ausgewählten Spektralbereichs von 400 bis 500 nm, mit einem Gehäuse (1), in dem eine Lichtquelle (2) und eine Aufnahme (4) für die zu behandelnden Teile (13) angeordnet sind und von dem wenigstens eine der Wände (8, 9) mit einem den ausgewählten Spektralbereich reflektierenden Spiegel (3) versehen ist, dadurch gekennzeichnet, daß die in dem Gehäuse (1) angeordnete Aufnahme (4) von mehreren entlang zwei einander gegenüberliegenden Wänden (8, 9) des Gehäuses (1) angeordneten und den ausgewählten Spektralbereich emittierenden Leuchtstoffröhren (2) umgeben ist.

2. Gerät nach Anspruch 1, dadurch gekennzeichnet, daß jeweils mehrere Leuchtstffröhren (2) in einer Reihe angeordnet sind.

3. Gerät nach Anspruch 1 oder 2, dadurch gekennzeichnet, daß die Leuchtstoffröhren (2) in Reihe geschaltet sind.

4. Gerät nach einem der Ansprüche, 1 bis 3, dadurch gekennzeichnet, daß die Leuchtstoffröhren (2) eine mit Europium dotierte Beschichtung aus einem Barium-Magnesium-Aluminat aufweisen.

5. Gerät nach einem der Ansprüche 1 bis 4, dadurch gekennzeichnet, daß die Aufnahme (4) ein gasdicht verschließbarer Behälter ist, der aus einem für den ausgewählten Spektralbereich durchlässigen Material besteht.

6. Gerät nach Anspruch 5, dadurch gekennzeichnet, daß der Behälter (4) aus Glas besteht.

7. Gerät nach Anspruch 5 oder 6, dadurch gekennzeichnet daß der Behälter (4) mit einem Vakuumanschluß (6) versehen ist.

8. Gerät nach Anspruch 5 oder 6, dadurch gekennzeichnet, daß der Behälter (4) mit zwei Gasanschlüssen versehen ist.

9. Gerät nach Anspruch 7, dadurch gekennzeichnet, daß ein Vakuummeter (II) vorgesehen ist, das das Ein- bzw. Ausschalten der Leuchtstoffröhre, (2) steuert.

10. Gerät nach einem der Ansprüche 1 bis 9, dadurch gekennzeichnet, daß die Aufnahme (4) aus dem Gehäuse (1) herausnehmbar ist.

11. Gerät nach einem der Ansprüche 1 bis 10, dadurch gekennzeichnet, daß das Gehäuse (1) am Boden (8) und in der Decke (9) Luftdurchtrittsöffnungen (10) aufweist.

## Claims

1. Apparatus for treating dental prosthetic parts with radiation having a selected spectral range of 400 to 500 nm, having a housing (1) in which are arranged a light source (2) and a receptacle (4) for the parts (13) to be treated, at least one of the housing walls (8, 9) being provided with a mirror (3) reflecting the selected spectral range, characterized in that the receptacle (4) arranged in the housing (1) is surrounded by a plurality of luminescent tubes (2), which are arranged along two opposing walls (8, 9) of the housing (1) and which emit light in the selected spectral range.

2. Apparatus according to Claim 1, characterized in that respective pluralitites of the luminescent tubes are arranged in rows.

3. Apparatus according to Claim 1 or 2, characterized in that the luminescent tubes (2) are connected in series.

4. Apparatus according to any one of Claims 1 to 3, characterized in that the luminescent tubes (2) comprise a coating of a barium-magnesium aluminate doped with europium.

5. Apparatus according to any one of Claims 1 to 4, characterized in that the receptacle (4) is a container closable in a gas-tight manner and made of a material that is permeable to the selected spectral range.

6. Apparatus according to Claim 5, characterized in that the container (4) is made of glass.

7. Apparatus according to Claim 5 or 6, characterized in that the container (4) is fitted with a vacuum connection (6).

8. Apparatus according to Claim 5 or 6, characterized in that the container (4) is fitted with two gas connections.

9. Apparatus according to Claim 7, characterized in that a vacuum meter (11) is provided, which controls the switching on and off of the luminescent tubes (2).

10. Apparatus according to any one of Claims 1 to 9, characterized in that the receptacle (4) can be removed from the housing (1).

11. Apparatus according to any one of Claims 1 to 10, characterized in that the housing (1) has air vents (10) in its top and bottom walls (8, 9).

## Revendications

1. Appareil pour le traitement de prothèses dentaires à l'aide d'un rayonnement d'un domaine spectral sélectionné de 400 à 500 nm avec un boîtier (1) dans lequel est disposée une source de lumière (2) et un logement (4) pour les pièces à traiter (13) et dont au moins l'une des parois (8, 9) est munie d'un miroir (3) réfléchissant le domaine spectral sélectionné, caratérisé en ce que le logement (4) disposé à l'intérieur du boîtier (1) est entouré par plusieurs tubes fluorescents (2) placés le long de deux parois opposées (8, 9) du boîtier (1) et émettant dans le domaine spectral sélectionné.

2. Appareil selon la revendication 1, caractérisé en ce que plusieurs tubes fluorescents (2) sont disposés respectivement en une rangée.

3. Appareil selon l'une des revendications 1 ou 2, caractérisé en ce que les tubes fluorescents (2) sont montés en série.

4. Appareil selon l'une quelconque des revendications 1 à 3, caractérisé en ce que les tubes fluorescents (2) sont revêtus d'une couche d'aluminate de baryum et de magnésium dopé d'europium.

5. Appareil selon l'une quelconque des revendications 1 à 4, caractérisé en ce que le logement (4) est constitué par un récipient pouvant être fermé de manière étanche aux gaz qui est réalisé en un matériau transparent au domaine spectral sélectionné.

6. Appareil selon la revendication 5, caractérisé en ce que le récipient (4) est réalisé en verre.

7. Appareil selon l'une des revendications 5 ou 6, caractérisé en ce que le récipient (9) est muni d'un raccord vide (6).

8. Appareil selon l'une des revendications 5 ou 6, caractérisé en ce que le récipient (4) est muni de deux conduites de gaz.

9. Appareil selon la revendication 7, caractérisé en ce qu'il comprend un vacuomètre (11) qui commande la connexion ou la déconnexion des tubes fluorescents (2).

10. Appareil selon l'une quelconque des revendications 1 à 9, caractérisé en ce que le logement (9) peut être retiré du boîtier (1).

11. Appareil selon l'une quelconque des revendications 1 à 10, caractérisé en ce que le fond (8) et le plafond (9) du boîtier (1) présentent des ouvertures de passage d'air (10).

FIG.1

FIG.2

0 090 948